# EUROPEAN PATENT APPLICATION

(11) **EP 4 831 942 A1**
(43) Date of publication of application: **28.10.2026**
(21) Application number: 23962232.7
(22) Date of filing: 21.12.2023
(51) Int. Cl.: G06V 40/14, G06T 7/00

(54) **BIOMETRIC AUTHENTICATION DEVICE, BIOMETRIC AUTHENTICATION METHOD, AND BIOMETRIC AUTHENTICATION PROGRAM**

(71) Applicant: Fujitsu Frontech Limited, Inagi-shi, Tokyo 206-8555 (JP)
(72) Inventor: SHIINA, Yusuke, Inagi-shi, Tokyo 206-8555 (JP)
(74) Representative: Haseltine Lake Kempner LLP
(86) International application number: PCT/JP2023/045904
(87) International publication number: WO 2025/134312

(57) **Abstract**

A prediction unit predicts a stop position at which a body part of an authentication subject stops based on a plurality of images obtained by an imaging device capturing the body part which moves toward the imaging device in a distance-measurement mode. A control unit switches an imaging mode of the imaging device from the distance-measurement mode to an authentication mode before the body part stops at the stop position. An authentication unit performs biometric authentication on the authentication subject by using an image of the body part captured by the imaging device in the authentication mode.

## Description

### Technical Field

The present invention relates to a biometric authentication technique.

### Background Art

Biometric authentication is a technique for performing identity verification using biometric features such as fingerprints, faces, and veins. Among them, palm vein authentication in which identity verification is performed using the palm vein is a technique in which a vein pattern is acquired from a palm vein image acquired by capturing the palm with a vein sensor, and authentication is performed using the vein pattern.

With respect to palm vein authentication, there is known a vein authentication device that authenticates veins of a palm and a finger at a low price with less installation space (see, for example, Patent Document 1). An automatic control device that predicts final indication coordinates from an initial action using a three-dimensional image sensor is also known (see, for example, Patent Document 2 and Non-Patent Document 1).

There is also known a beam generation optical system capable of reducing the size of a beam spot, preventing a decrease in spot luminance, and achieving a reduction in thickness of an imaging device without reducing the sensitivity and accuracy of a distance-measurement function (See, for example, Patent Document 3).

### Prior Art Documents

### Patent Documents

Patent Document 1: JP 2008-246011 A
Patent Document 2: JP 2013-109444 A
Patent Document 3: WO 2018/078793 A

### Non-Patent Document

Non-Patent Document 1: Kusano and Omura, "A Study on Pointing Gesture Prediction Using Minimum-Jerk Model", IPSJ Interaction 2012, p. 929-934, 2012

### Summary of Invention

### Technical Problem

In the palm vein authentication, it is desirable that the position of the palm of the authentication subject is included in a predetermined range in order to capture a palm vein image suitable for authentication. The predetermined range is defined by an upper limit value and a lower limit value of a coordinate that increases as the palm moves away from the vein sensor. The predetermined range may also be referred to as an authenticatable range.

In order to capture a palm vein image in the authenticatable range, a distance-measurement mode and an authentication mode may be used as imaging modes of the vein sensor.

The distance-measurement mode is an imaging mode in which a palm is captured using distance-measurement illumination light to acquire an image for distance measurement, a distance between the palm and the vein sensor is measured using the image for distance measurement, and the palm is guided so that the position of the palm is included in the authenticatable range. The distance-measurement mode may also be referred to as a guiding mode. The authentication mode is an imaging mode in which a palm vein image for authentication is acquired by capturing the palm using authentication illumination light.

However, in the distance-measurement mode, when the imaging mode is switched to the authentication mode after confirming that the palm enters the authenticatable range and stops, a delay due to the switching occurs. Therefore, it is difficult to quickly acquire the palm vein image and perform the palm vein authentication at the timing when the palm stops within the authenticatable range.

Note that such a problem occurs not only in palm vein authentication but also in various types of biometric authentication using an image of a body part.

In one aspect, an object of the present invention is to quickly perform biometric authentication using an image of a body part moving toward an imaging device.

### Solution to Problem

According to one embodiment, a biometric authentication device includes a prediction unit, a control unit, and an authentication unit.

The prediction unit predicts a stop position at which a body part of an authentication subject stops based on a plurality of images obtained by an imaging device capturing the body part which moves toward the imaging device in a distance-measurement mode. The control unit switches an imaging mode of the imaging device from the distance-measurement mode to an authentication mode before the body part stops at the stop position. The authentication unit performs biometric authentication on the authentication subject using an image of the body part captured by the imaging device in the authentication mode.

According to another embodiment, in a biometric authentication method, the computer performs the following process.

The computer predicts a stop position at which a body part of an authentication subject stops based on a plurality of images obtained by an imaging device capturing the body part which moves toward the imaging device in a distance-measurement mode. The computer switches an imaging mode of the imaging device from the distance-measurement mode to an authentication mode before the body part stops at the stop position, and performs biometric authentication on the authentication subject using an image of the body part captured by the imaging device in the authentication mode.

According to still another embodiment, a biometric authentication program causes a computer to perform the following process.

The computer predicts a stop position at which a body part of an authentication subject stops based on a plurality of images obtained by an imaging device capturing the body part which moves toward the imaging device in a distance-measurement mode. The computer switches an imaging mode of the imaging device from the distance-measurement mode to an authentication mode before the body part stops at the stop position, and performs biometric authentication on the authentication subject using an image of the body part captured by the imaging device in the authentication mode.

### Advantageous Effects of Invention

In one aspect, biometric authentication can be quickly performed using an image of a body part moving toward an imaging device.

### Brief Description of Drawings

Fig. 1 is a functional configuration diagram of a biometric authentication device according to an embodiment.
Fig. 2 is a flowchart of first biometric authentication processing.
Fig. 3 is a functional configuration diagram illustrating a specific example of a biometric authentication device.
Fig. 4 is a diagram illustrating distance-measurement illumination light and authentication illumination light.
Fig. 5 is a diagram illustrating a planar arrangement of distance measurement light sources and authentication light sources.
Fig. 6 is a diagram illustrating images for distance measurement.
Fig. 7 is a diagram illustrating first switching control.
Fig. 8 is a diagram illustrating second switching control.
Fig. 9A is a flowchart (part 1) of second biometric authentication processing.
Fig. 9B is a flowchart (part 2) of second biometric authentication processing.
Fig. 9C is a flowchart (part 3) of second biometric authentication processing.
Fig. 9D is a flowchart (part 4) of second biometric authentication processing.
Fig. 10 is a diagram illustrating biometric authentication processing.
Fig. 11 is a hardware configuration diagram of the information processing device.

### Description of Embodiments

Hereinafter, embodiments will be described in detail with reference to the drawings.

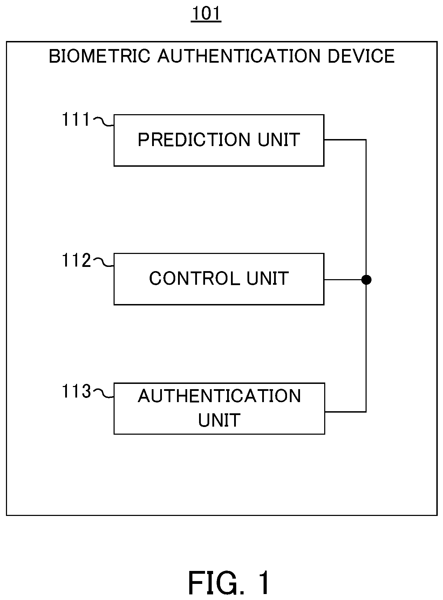

Fig. 1 illustrates a functional configuration example of a biometric authentication device according to an embodiment. A biometric authentication device 101 in Fig. 1 includes a prediction unit 111, a control unit 112, and an authentication unit 113.

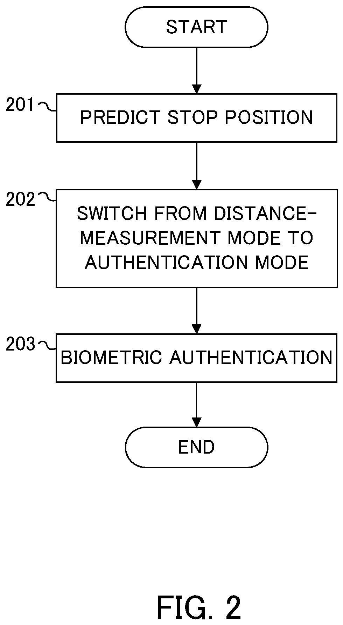

Fig. 2 is a flowchart illustrating an example of first biometric authentication processing performed by the biometric authentication device 101 of Fig. 1. First, the prediction unit 111 predicts a stop position at which a body part of an authentication subject stops based on a plurality of images obtained by an imaging device capturing the body part which moves toward the imaging device in a distance-measurement mode (step 201).

Next, before the body part stops at the stop position, the control unit 112 switches an imaging mode of the imaging device from the distance-measurement mode to an authentication mode (step 202). Next, the authentication unit 113 performs biometric authentication on the authentication subject by using an image of the body part captured by the imaging device in the authentication mode (step 203).

According to the biometric authentication device 101 of Fig. 1, the biometric authentication can be quickly performed using the image of the body part moving toward the imaging device.

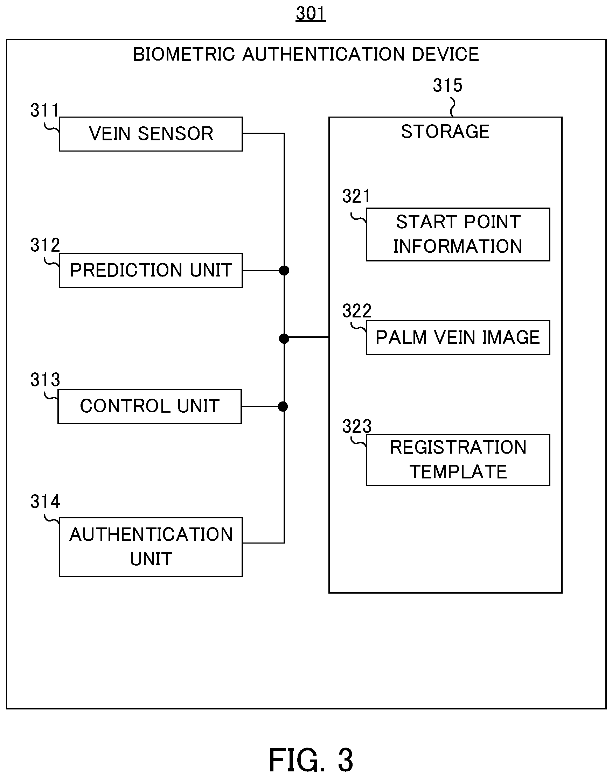

Fig. 3 illustrates a specific example of the biometric authentication device 101 of Fig. 1. A biometric authentication device 301 in Fig. 3 includes a vein sensor 311, a prediction unit 312, a control unit 313, an authentication unit 314, and a storage 315. The prediction unit 312, the control unit 313, and the authentication unit 314 in Fig. 3 correspond to the prediction unit 111, the control unit 112, and the authentication unit 113 in Fig. 1, respectively.

The biometric authentication device 301 is used for various user authentication applications in automatic transaction devices such as automatic teller machines (ATMs), entrance/exit devices, personal computers (PCs), multifunction printers, safes, lockers, and the like.

The vein sensor 311 is an imaging device which is hardware, and captures a palm of the authentication subject to acquire a palm vein image. As the vein sensor 311, for example, an imaging device described in Patent Document 3 can be used.

The vein sensor 311 includes a near-infrared camera, and irradiates the palm of the authentication subject with near infrared light to acquire a near-infrared image of the palm as a palm vein image. The palm is an example of a body part of the authentication subject.

The vein sensor 311 operates in an imaging mode that is either the distance-measurement mode or the authentication mode. The vein sensor 311 irradiates the palm with distance-measurement illumination light called a ranging beam in the distance-measurement mode, and irradiates the palm with authentication illumination light in an authentication mode.

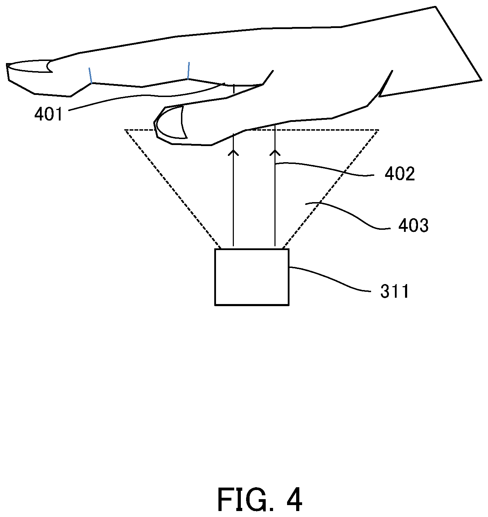

Fig. 4 illustrates examples of the distance-measurement illumination light and the authentication illumination light. The authentication subject who is a user holds a palm 401 over the vein sensor 311 and moves the palm 401 toward the vein sensor 311. At this time, the vein sensor 311 operates in the distance-measurement mode, irradiates the palm 401 with the distance-measurement illumination light 402, and captures the palm 401 to acquire an image for distance measurement. The distance-measurement illumination light 402 is, for example, visible light.

When the palm 401 enters the authenticatable range, the vein sensor 311 operates in the authentication mode, irradiates the palm 401 with the authentication illumination light 403, and captures the palm 401 to acquire the palm vein image for authentication. The authentication illumination light 403 is, for example, near-infrared light.

A part of the near-infrared light is reflected by the surface of the palm 401, but a part of the near-infrared light passes through the skin and cells, penetrates into the palm 401, and is absorbed by hemoglobin contained in venous blood. By capturing the palm 401 irradiated with the near-infrared light by the near-infrared camera, a palm vein image including a vein pattern in addition to the surface information of the palm 401 can be acquired.

The vein sensor 311 continuously captures an image for distance measurement or a palm vein image for authentication at a predetermined imaging interval. Each captured image may also be referred to as a frame, and the imaging interval may also be referred to as a frame time.

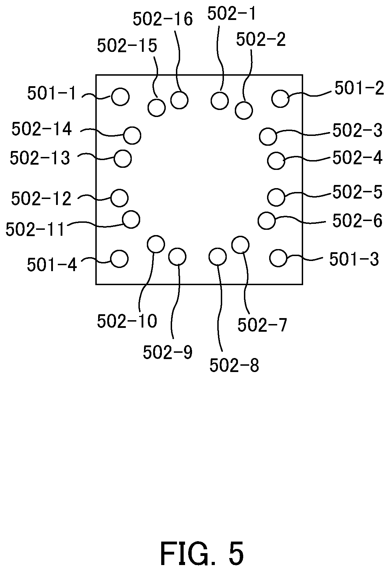

Fig. 5 illustrates a planar arrangement example of distance measurement light sources and authentication light sources in the vein sensor 311. The quadrangle in Fig. 5 represents the shape of the vein sensor 311 viewed from above. The distance measurement light source 501-1 to the distance measurement light source 501-4 are arranged at four corners of the quadrangle, and the authentication light source 502-1 to the authentication light source 502-16 are arranged in a circle inside the distance measurement light source 501-1 to the distance measurement light source 501-4.

The distance measurement light source 501-1 to the distance measurement light source 501-4 and the authentication light source 502-1 to the authentication light source 502-16 are, for example, light-emitting diode (LED) light sources. The distance measurement light source 501-1 to the distance measurement light source 501-4 irradiate the palm 401 with distance-measurement illumination light 402 in the distance-measurement mode. The authentication light source 502-1 to the authentication light source 502-16 irradiate the palm 401 with authentication illumination light 403 in the authentication mode.

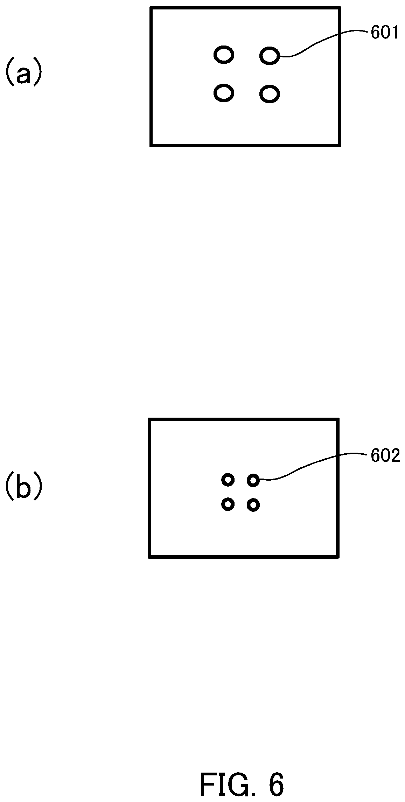

Fig. 6 illustrates examples of an image for distance measurement acquired by capturing the palm 401 irradiated with the distance-measurement illumination light 402. Fig. 6 (a) illustrates an example of an image in a case where the position of the palm 401 is close to the vein sensor 311. Four beam spots 601 represent the distance-measurement illumination lights 402 emitted from the distance measurement light source 501-1 to the distance measurement light source 501-4, respectively.

Fig. 6 (b) illustrates an example of an image in a case where the position of the palm 401 is away from the vein sensor 311. Four beam spots 602 represent the distance-measurement illumination lights 402 emitted from the distance measurement light source 501-1 to the distance measurement light source 501-4, respectively.

The prediction unit 312 checks whether or not four beam spots are included in the image for distance measurement, and in a case where the four beam spots are included, it is determined that the palm 401 is held over the vein sensor 311.

The distance from the center of the image of Fig. 6 (a) to each beam spot 601 is longer than the distance from the center of the image of Fig. 6 (b) to each beam spot 602. As described above, there is a predetermined correlation between the distance from the center of the image for distance measurement to each beam spot and the distance between the palm 401 and the vein sensor 311.

Therefore, the prediction unit 312 uses this correlation to measure the distance between the palm 401 and the vein sensor 311 at the image-capture time of the image for distance measurement. As the image-capture time, for example, the time at which the image capturing is started is used. Then, the prediction unit 312 obtains a coordinate x(t(c)) of the palm 401 at an image-capture time t(c) of an image indicated by an index c from the measured distance.

The coordinate x(t(c)) represents a coordinate in a direction perpendicular to the plane of Fig. 5. As the coordinate x(t(c)), for example, a height representing a distance from the vein sensor 311 to the palm 401 is used.

When it is detected that the palm 401 is held over, the prediction unit 312 generates start point information 321 and stores the start point information in the storage 315. The start point information 321 includes c, t(c), and x(t(c)) at the start point. The index c is 0, t(c) is 0, and x(t(c)) is x(0) at the start point. Thereafter, c and t(c) are updated by the following equations each time an image is captured.$c = c + 1$ (1) $t \left(c\right) = c \times Δt$ (2)

Δt represents an imaging interval. The index c represents the number of times of imaging performed between the image-capture time t(1) and the image-capture time t(c). The prediction unit 312 calculates a velocity V(t(c)) and an acceleration a(t(c)) of the palm 401 at the image-capture time t(c) by the following equation.$V \left(t\left(c\right)\right) = \left\{x\left(t\left(c\right)\right)-x\left(t\left(c-1\right)\right)\right\} / Δt$ (3) $a \left(t\left(c\right)\right) = \left\{V\left(t\left(c\right)\right)-V\left(t\left(c-1\right)\right)\right\} / Δt$ (4)

The prediction unit 312 predicts the stop position and the stop time at which the palm 401 moving toward the vein sensor 311 stops based on a(t(c)) calculated from each of the plurality of images for distance measurement and the motion model of the human body. As the motion model of the human body, for example, the minimum-jerk model described in Non-Patent Document 1 is used.

The minimum-jerk model of Non-Patent Document 1 is a motion model using the fact that the time integration of the jerk is minimized when the human hand moves. According to the minimum-jerk model, assuming that the velocity and the acceleration are 0 at the start point and the end point of the motion of the hand endpoint of the human, the coordinate of the start point is x0, and the coordinate of the end point is xf, the coordinate x(τ) of the hand endpoint can be expressed by the following equation using the parameter τ related to the time t.$x \left(τ\right) = x 0 + \left(xf-x0\right) \left(6{τ}^{5}-15{τ}^{4}+10{τ}^{3}\right)$ (5) $τ = t / T$ (6)

The parameter T represents a movement time during which the hand endpoint moves from the start point to the end point. During the movement of the hand endpoint from the start point to the end point, the speed becomes local maximum only once, and the acceleration becomes local minimum after becoming local maximum. Therefore, when τ at the time when the acceleration becomes local maximum is denoted by τ1 and τ at the time when the acceleration becomes local minimum is denoted by τ2, τ1 and τ2 can be obtained on the condition that the value of the polynomial of the jerk obtained by differentiating the right side of equation (5) three times becomes 0. The obtained τ1 and τ2 are expressed by the following equations.$τ 1 = \left(3-{3}^{1 / 2}\right) / 6 \approx 0.21$ (7) $τ 2 = \left(3+{3}^{1 / 2}\right) / 6 \approx 0.79$ (8)

From equation (7), it can be seen that the time from the start of the movement of the hand endpoint to the local maximum acceleration is about 21% of T. In other words, in a case where the time at which the acceleration becomes local maximum while the palm 401 is moving is known, the movement time T from the start point to the end point can be obtained.

The end point corresponds to the stop position where the palm 401 stops. Therefore, a stop time tf at which the palm 401 stops can be obtained from the movement time T. First, the following equation is obtained by deforming equation (5) in order to obtain the coordinate xf of the stop position where the palm 401 stops.$xf = \left(x\left(τ\right)-x0\right) / \left(6{τ}^{5}-15{τ}^{4}+10{τ}^{3}\right) + x 0$ (9)

Next, the following equation is obtained by substituting x(τ1) into x(τ) in equation (9) and substituting τ1 in equation (7) into τ.$xf = \left(4x\left(τ1\right)-\left(2+{3}^{1 / 2}\right)x0\right) / \left(2-{3}^{1 / 2}\right)$ (10)

When the acceleration a(t(c)) becomes local maximum, the acceleration a(t(c)) changes from increasing to decreasing. Therefore, the prediction unit 312 predicts the stop position by calculating xf by equation (10) using x(0) included in the start point information 321 as x0 and using the coordinate x(t(c)) when the acceleration a(t(c)) changes from increasing to decreasing as x(τ1). In a case where the gradient of the acceleration a(t(c)) changes from a positive value to a negative value, the prediction unit 312 determines that the acceleration a(t(c)) has changed from increasing to decreasing.

Next, the prediction unit 312 checks whether or not xf is included in the authenticatable range. In a case where xf is equal to or less than the upper limit value of the authenticatable range and equal to or more than the lower limit value, the prediction unit 312 determines that xf is included in the authenticatable range.

In a case where xf is included in the authenticatable range, the prediction unit 312 calculates time t1 at which the acceleration a(t(c)) changes from increasing to decreasing by the following equation.$t 1 = c 1 \times Δt$ (11)

The parameter c1 represents the index c when it is detected that the acceleration a(t(c)) has changed from increasing to decreasing.

Since t(c) included in the start point information 321 is 0, the time at the start point is 0. Therefore, the time from the start of the movement of the palm 401 until the acceleration becomes local maximum coincides with the time t1, and the movement time T of the palm 401 coincides with the stop time tf. Therefore, the prediction unit 312 uses equations (6) and (7) to calculate the stop time tf by the following equation, thereby predicting the stop time tf.$tf = t 1 / 0.21$ (12)

Then, the prediction unit 312 outputs the predicted stop time tf to the control unit 313. Using the stop time tf output from the prediction unit 312, the control unit 313 calculates the number of times N of imaging performed between the time t1+Δt and the stop time tf by the following equation.$N = \left(tf-t1\right) / Δt$ (13)

In a case where the right side of equation (13) is a non-integer, the prediction unit 312 rounds down a numerical value after the decimal point to obtain an integer N.

Next, the control unit 313 decrements N by 1 every time an image is captured until N reaches a predetermined number M. The number M is an integer of 1 or more and less than N. Then, when N = M, the control unit 313 switches the imaging mode of the vein sensor 311 from the distance-measurement mode to the authentication mode, thereby controlling the vein sensor 311 to capture the palm 401 in the authentication mode.

The time when N = M is satisfied corresponds to a predetermined time before the stop time tf. Therefore, the control unit 313 can specify the predetermined time before the stop time tf by checking whether N has become M, and can switch the imaging mode of the vein sensor 311 from the distance-measurement mode to the authentication mode at the predetermined time.

After the imaging mode is switched from the distance-measurement mode to the authentication mode, the vein sensor 311 acquires the palm vein image 322 for authentication by capturing the palm 401. The storage 315 stores the acquired palm vein image 322.

The authentication unit 314 performs palm vein authentication for the authentication subject using the palm vein image 322. The storage 315 stores a registration template 323 in advance. The registration template 323 includes registered feature information of one or more registrants. For example, the authentication unit 314 acquires the registered feature information of each registrant from a database server (not illustrated), and generates the registration template 323 using the acquired registered feature information.

The authentication unit 314 extracts feature information of the vein pattern from the vein pattern included in the palm vein image 322, and compares the extracted feature information with registered feature information included in the registration template 323.

For example, the authentication unit 314 calculates a degree of similarity between the feature information of the vein pattern and the registered feature information of each registration subject. The authentication unit 314 determines that the authentication is successful in a case where the degree of similarity to any of the registration subjects is larger than the threshold value, and determines that the authentication is failed in a case where the degree of similarity to each of the registration subjects is equal to or less than the threshold value. Then, the authentication unit 314 outputs an authentication result indicating authentication success or authentication failure.

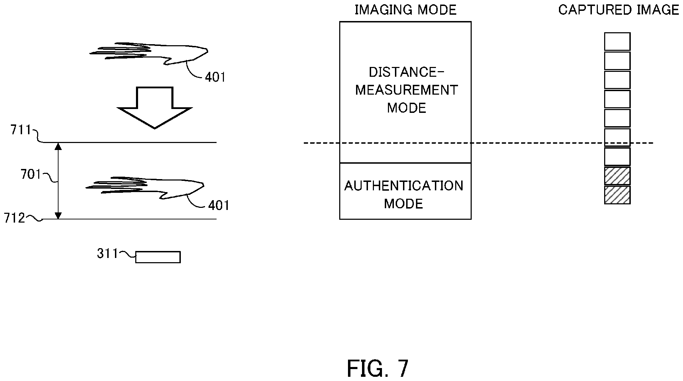

Fig. 7 illustrates an example of first switching control in the biometric authentication processing performed by the biometric authentication device 301 of Fig. 3. In the switching control of Fig. 7, the imaging mode is not switched based on the stop time tf predicted by the prediction unit 312, but the imaging mode is switched after it is confirmed that the palm 401 has entered the authenticatable range 701 of the vein sensor 311 and stopped. The authenticatable range 701 is defined by an upper limit value 711 and a lower limit value 712 of the coordinate x(t(c)).

The authentication subject holds the palm 401 over the vein sensor 311 and brings the palm 401 close to the vein sensor 311. At this time, the vein sensor 311 captures the palm 401 in the distance-measurement mode and acquires an image for distance measurement indicated by a white rectangle.

After confirming that the palm 401 has stopped within the authenticatable range 701, the control unit 313 switches the imaging mode from the distance-measurement mode to the authentication mode. As a result, the vein sensor 311 captures the palm 401 in the authentication mode, and acquires a palm vein image for authentication indicated by a hatched rectangle.

However, since a delay occurs due to the switching, when the palm 401 stops immediately below the upper limit value 711, the imaging mode has not yet been switched to the authentication mode. Therefore, at the timing when the palm 401 stops, the palm 401 is still captured in the distance-measurement mode, and the palm vein authentication is not performed.

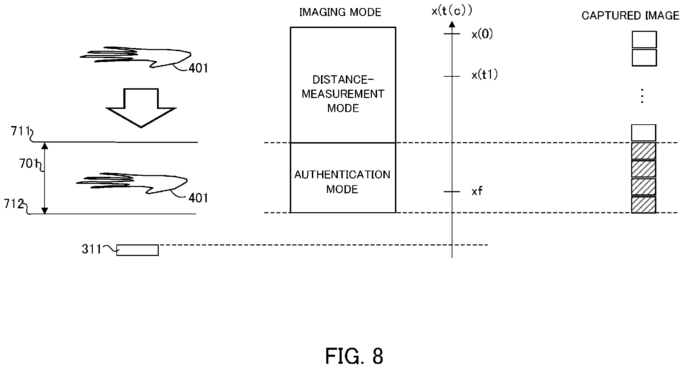

Fig. 8 illustrates an example of second switching control in the biometric authentication process performed by the biometric authentication device 301 of Fig. 3. In the switching control of Fig. 8, the imaging mode is switched based on the stop time tf predicted by the prediction unit 312.

As in the case of Fig. 7, the authentication subject holds the palm 401 over the vein sensor 311 and brings the palm 401 close to the vein sensor 311. When detecting that the palm 401 is held over, the prediction unit 312 obtains a coordinate x(0) at the start point. The vein sensor 311 captures the palm 401 in the distance-measurement mode and acquires an image for distance measurement indicated by a white rectangle.

When detecting that the acceleration a(t(c)) has changed from increasing to decreasing, the prediction unit 312 calculates xf by equation (10) using the coordinate x(t1) at that time and calculates the stop time tf.

The control unit 313 calculates the number of times N of imaging performed between the time t1+Δt and the stop time tf by equation (13), and decrements N by 1 every time an image is captured. In the case of N = M, the control unit 313 switches the imaging mode from the distance-measurement mode to the authentication mode. As a result, the vein sensor 311 captures the palm 401 in the authentication mode, and acquires a palm vein image for authentication indicated by a hatched rectangle.

In the case of M = 1, even when the palm 401 stops immediately below the upper limit value 711, the palm 401 can be captured by switching the imaging mode to the authentication mode at the timing when the palm 401 stops. As a result, since the palm vein image can be quickly acquired and the palm vein authentication can be performed, the operability of the vein sensor 311 by the authentication subject who is the user is improved.

Furthermore, by setting the predetermined number M to an appropriate value, it is also possible to capture the palm 401 by switching the imaging mode to the authentication mode at the timing when the palm 401 enters the authenticatable range 701. Also in this case, since the palm vein image can be quickly acquired and the palm vein authentication can be performed, the operability of the vein sensor 311 by the authentication subject is improved.

The authenticatable range 701 and the imaging interval Δt change according to the vein sensor 311. Therefore, the value of M suitable for specifying the timing at which the palm 401 enters the authenticatable range 701 may be determined by repeating the experiment of actually performing the palm vein authentication using the biometric authentication device 301.

In a case where the imaging mode is switched at the timing when the palm 401 enters the authenticatable range 701, there is a possibility that the palm vein image is acquired before the palm 401 stops and the palm vein authentication is performed. However, even when the palm 401 is moving, if the speed of the palm 401 is sufficiently low, it is possible to acquire a palm vein image suitable for authentication.

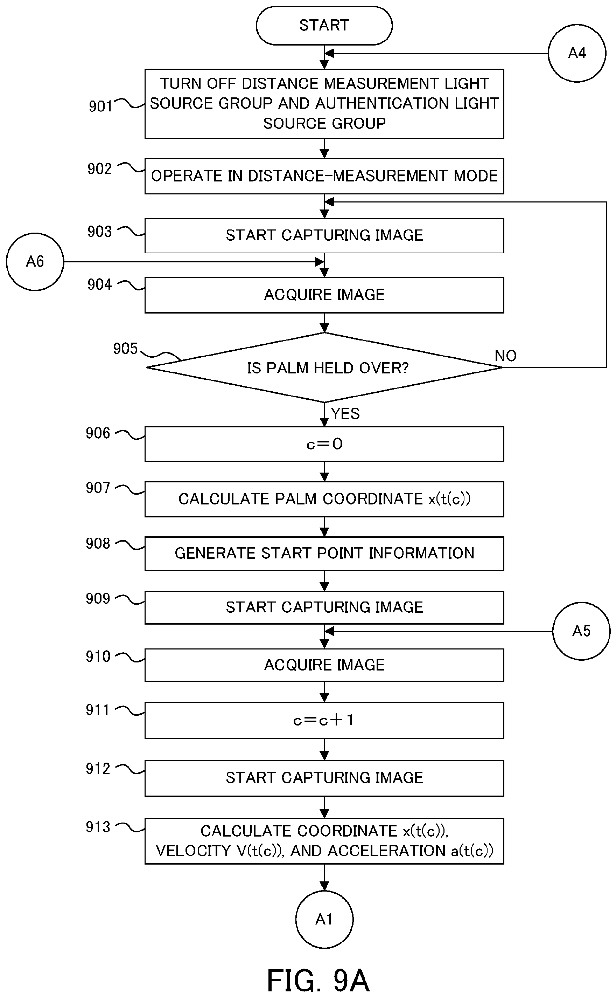

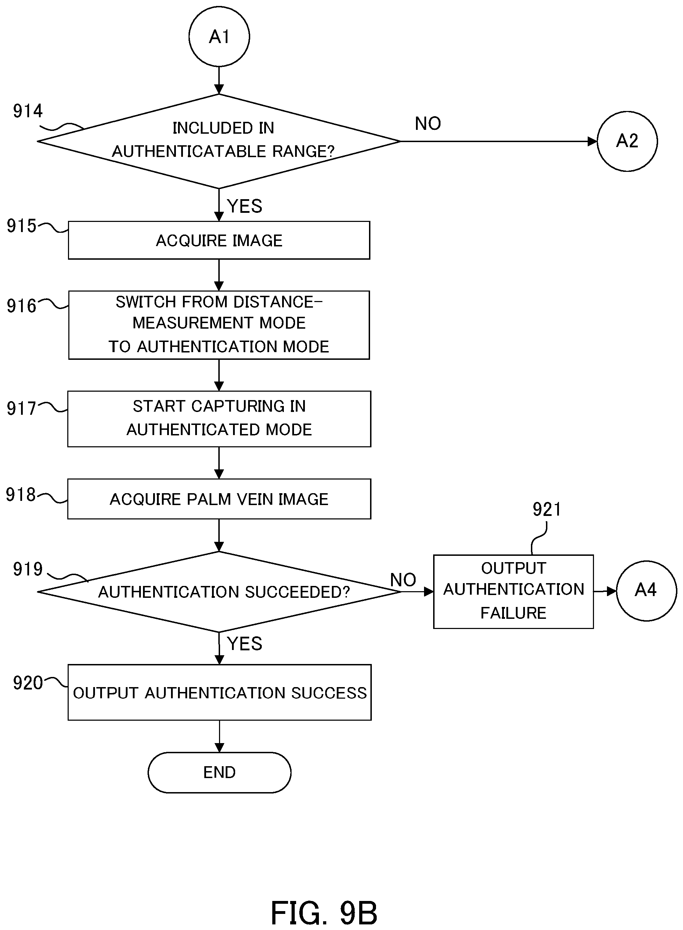

Figs. 9A to 9D are a flowchart illustrating an example of second biometric authentication processing performed by the biometric authentication device 301 of Fig. 3. In the following description, the distance measurement light source 501-1 to the distance measurement light source 501-4 in Fig. 5 may be collectively referred to as a distance measurement light source group, and the authentication light source 502-1 to the authentication light source 502-16 may be collectively referred to as an authentication light source group.

First, the control unit 313 controls the vein sensor 311 to turn off the distance measurement light source group and the authentication light source group (step 901), and controls the vein sensor 311 to operate in the distance-measurement mode (step 902). As a result, the vein sensor 311 turns on the distance measurement light source group.

The vein sensor 311 then starts capturing an image (step 903) and acquires the captured image (step 904). Then, the prediction unit 312 checks whether or not the palm is held over the vein sensor 311 using the captured image (step 905). In a case where the palm is not held over (step 905, NO), the biometric authentication device 301 repeats the processing of step 903 and subsequent steps.

In a case where the palm is held over (step 905, YES), the prediction unit 312 sets 0 to the index c (step 906). Next, the prediction unit 312 measures the distance between the palm and the vein sensor 311 using the captured image, and calculates a coordinate x(t(c)) of the palm from the measured distance (step 907).

Then, the prediction unit 312 generates the start point information 321 including c, t(c), and x(t(c)) (step 908). As part of the start point information 321, c is 0, t(c) is 0, and x(t(c)) is x(0).

The vein sensor 311 then starts capturing the next image (step 909) and acquires the captured image (step 910). Then, the prediction unit 312 increments c by 1 (step 911), and the vein sensor 311 starts capturing the next image (step 912).

Next, the prediction unit 312 calculates a coordinate x(t(c)), a velocity V(t(c)), and an acceleration a(t(c)) using the image acquired in step 910 (step 913). Then, the prediction unit 312 checks whether or not x(t(c)) is included in the authenticatable range (step 914). The prediction unit 312 determines that x(t(c)) is included in the authenticatable range in a case where x(t(c)) is less than or equal to the upper limit value and equal to or greater than the lower limit value of the authenticatable range.

In a case where x(t(c)) is included in the authenticatable range (step 914, YES), the vein sensor 311 acquires an image that is already being captured (step 915), and the prediction unit 312 requests the control unit 313 to switch the imaging mode of the vein sensor 311. Then, the control unit 313 switches the imaging mode from the distance-measurement mode to the authentication mode (step 916). As a result, the vein sensor 311 turns off the distance measurement light source group and turns on the authentication light source group.

The vein sensor 311 then starts capturing the palm in the authentication mode (step 917) and acquires the palm vein image 322 (step 918). Then, the authentication unit 314 performs the palm vein authentication for the authentication subject using the palm vein image 322 and checks whether or not the authentication has succeeded (step 919).

In a case where the authentication fails (step 919, NO), the authentication unit 314 outputs an authentication result indicating the authentication failure (step 921), and the biometric authentication device 301 repeats the processing of step 901 and subsequent steps. In a case where the authentication is successful (step 919, YES), the authentication unit 314 outputs an authentication result indicating that the authentication is successful (step 920), and the biometric authentication device 301 ends the processing.

In a case where x(t(c)) is not included in the authenticatable range (step 914, NO), the prediction unit 312 checks whether or not the acceleration a(t(c)) has changed from increasing to decreasing (step 922). In a case where the acceleration a(t(c)) has not changed from increasing to decreasing (step 922, NO), the biometric authentication device 301 repeats the processing of step 910 and subsequent steps.

In a case where the acceleration a(t(c)) has changed from increasing to decreasing (step 922, YES), the prediction unit 312 performs the processing of step 923. In step 923, the prediction unit 312 calculates the coordinate xf of the stop position of the palm using x(0) included in the start point information 321 and the coordinate x(t(c)) when the acceleration a(t(c)) changes from increasing to decreasing.

Next, the prediction unit 312 checks whether xf is included in the authenticatable range (step 924). In a case where xf is not included in the authenticatable range (step 924, NO), the biometric authentication device 301 repeats the processing of step 904 and subsequent steps.

In a case where xf is included in the authenticatable range (step 924, YES), the prediction unit 312 calculates the time t1 at which the acceleration a(t(c)) changes from increasing to decreasing, and calculates the stop time tf at which the palm stops using t1 (step 925). Then, the prediction unit 312 outputs the predicted stop time tf to the control unit 313.

Next, the control unit 313 calculates the number of times N of imaging performed between the time t1+Δt and the stop time tf by using the time t1 and the stop time tf (step 926).

Next, the vein sensor 311 acquires an image already being captured (step 927), and starts capturing the next image (step 928). Then, the control unit 313 decrements N by 1 (step 929) and compares N with a predetermined number M (step 930). In a case where N does not match M (step 930, NO), the biometric authentication device 301 repeats the processing of step 927 and subsequent steps.

If N matches M (step 930, YES), the vein sensor 311 acquires an image that is already being captured (step 931), and the control unit 313 switches the imaging mode from the distance-measurement mode to the authentication mode (step 932). As a result, the vein sensor 311 turns off the distance measurement light source group and turns on the authentication light source group.

Next, the control unit 313 sets the number of retries R to 0 (step 933) and increments R by 1 (step 934). Then, the control unit 313 compares R with a threshold value TH (step 935). As TH, for example, M+1 is used.

If R is less than TH (step 935, YES), the vein sensor 311 starts capturing the palm in the authentication mode (step 936) and acquires a captured palm vein image 322 (step 937). Then, the authentication unit 314 performs the palm vein authentication for the authentication subject using the palm vein image 322 and checks whether or not the authentication has succeeded (step 938).

In a case where the authentication fails (step 938, NO), the authentication unit 314 outputs an authentication result indicating the authentication failure (step 940), and the biometric authentication device 301 repeats the processing of step 934 and subsequent steps. In a case where R reaches TH (step 935, NO), the biometric authentication device 301 repeats the processing of step 901 and subsequent steps. In a case where the authentication is successful (step 938, YES), the authentication unit 314 outputs an authentication result indicating that the authentication is successful (step 939), and the biometric authentication device 301 ends the processing.

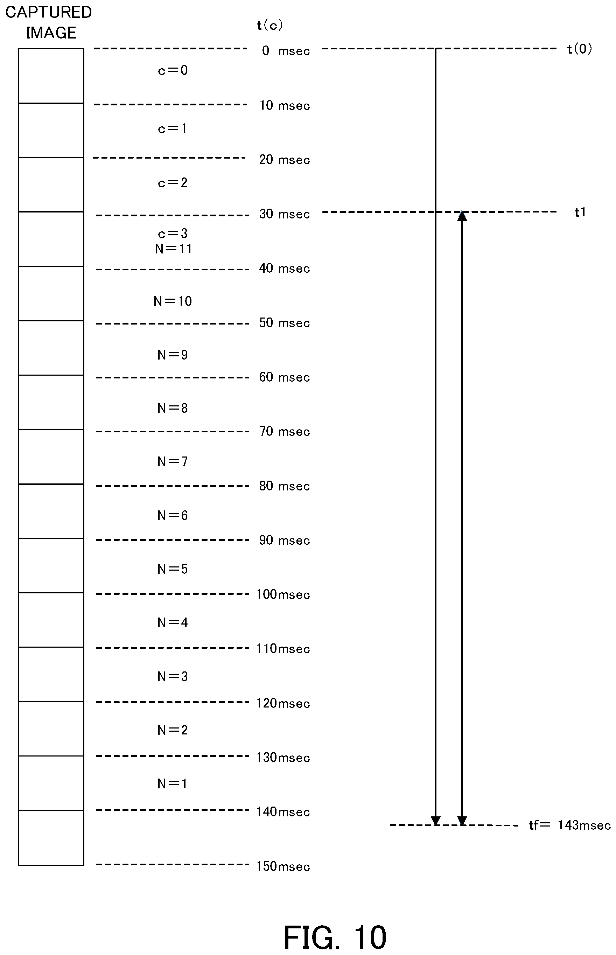

Fig. 10 illustrates an example of biometric authentication processing performed by the biometric authentication device 301 of Fig. 3. In this example, Δt = 10 msec and M = 1.

It is detected from the image at the image-capture time of 0 msec that the palm is held over, and when c = 3, it is detected from the image at the image-capture time of 20 msec that the acceleration a(t(c)) changes from increasing to decreasing. Therefore, c1 = 3, and t1 = 30 msec according to equation (11).

At this time, the prediction unit 312 calculates xf by equation (10) using the coordinates x(t1) and calculates the stop time tf. In this example, tf = 143 msec. The control unit 313 calculates the number of times N of imaging performed between the next image-capture time of 40 msec and the stop time of 143 msec by equation (13). In this case, N = 11.

Next, the control unit 313 decrements N by 1 every time an image is captured, and sets N = M = 1 after capturing of an image at the image-capture time of 130 msec is started. Therefore, the control unit 313 switches the imaging mode of the vein sensor 311 from the distance-measurement mode to the authentication mode.

Then, at the image-capture time of 140 msec before the stop time of 143 msec, the vein sensor 311 starts capturing the palm in the authentication mode and acquires the palm vein image. The authentication unit 314 performs palm vein authentication using the acquired palm vein image. As a result, it is possible to quickly acquire the palm vein image and perform the palm vein authentication at the timing when the palm stops.

On the other hand, in a case of M = 2, since N = M = 2 after the start of capturing an image at the image-capture time of 120 msec, the imaging mode is switched from the distance-measurement mode to the authentication mode. Then, at the image-capture time of 130 msec, capturing the palm is started in the authentication mode. As a result, it is possible to quickly acquire the palm vein image and perform the palm vein authentication at the timing before the palm stops. M may be an integer of 3 or more.

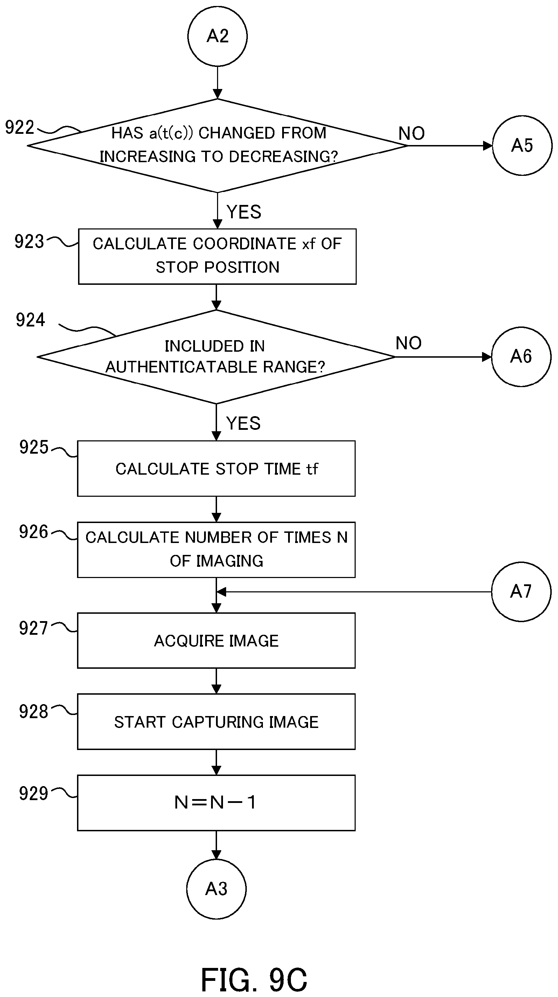

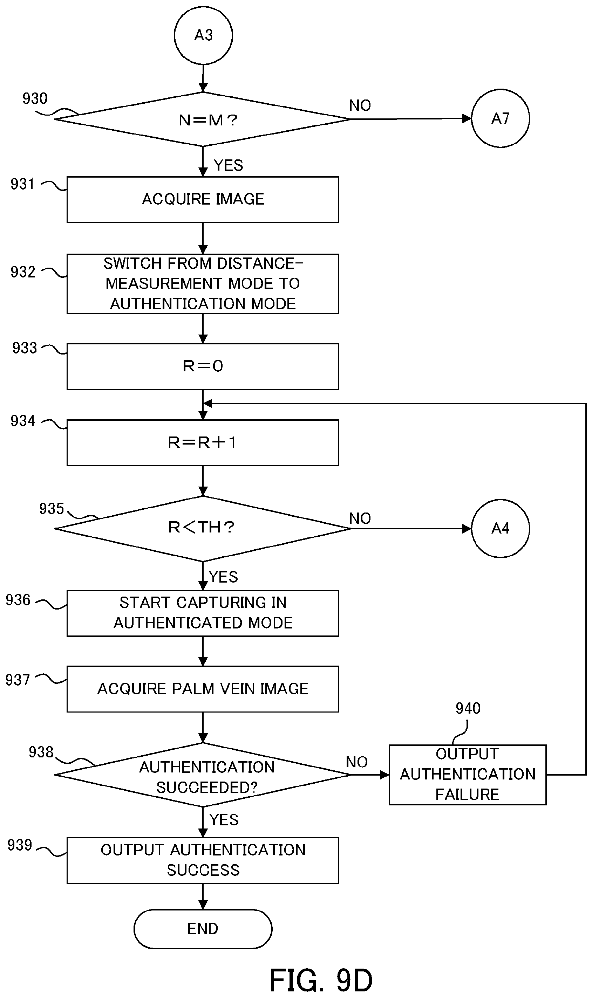

As another switching control, the biometric authentication device 301 may switch the imaging mode at a timing when it is determined that xf is included in the authenticatable range. In this case, the processing of step 925 in Fig. 9C to step 930 in Fig. 9D is omitted. Then, in a case where xf is included in the authenticatable range (step 924, YES), the prediction unit 312 requests the control unit 313 to switch the imaging mode of the vein sensor 311, and the biometric authentication device 301 immediately performs the processing in step 931 and subsequent steps.

Also in this case, it is possible to quickly acquire the palm vein image and perform the palm vein authentication at the timing before the palm stops.

In a case where the imaging mode is switched at the timing when it is determined that xf is included in the authenticatable range, there is a possibility that the palm vein image is acquired before the palm enters the authenticatable range, and the palm vein authentication is performed. However, in a case where the speed of the palm is sufficiently low, it is possible to acquire a palm vein image suitable for authentication.

The configurations of the biometric authentication device 101 of Fig. 1 and the biometric authentication device 301 of Fig. 3 are merely examples, and some structural elements may be omitted or changed according to the application or condition of the biometric authentication device. For example, in a case where the vein sensor 311 is installed outside the biometric authentication device 301 of Fig. 3, the vein sensor 311 can be omitted from the configuration of the biometric authentication device 301. The vein sensor 311 may capture a body part other than the palm to acquire a vein image.

The biometric authentication device 301 can perform biometric authentication using other biometric images such as a palm print, a fingerprint, and a face instead of palm vein authentication. In this case, an image sensor that acquires another biometric image is used instead of the vein sensor 311.

The flowcharts illustrated in Figs. 2 and 9A to 9D are merely examples, and some processing may be omitted or changed according to the configuration or conditions of the biometric authentication device.

The distance-measurement illumination light and the authentication illumination light illustrated in Fig. 4 are merely examples, and the distance-measurement illumination light and the authentication illumination light change according to the vein sensor 311. The planar arrangement of the distance measurement light sources and the authentication light sources illustrated in Fig. 5 and the images for distance measurement illustrated in Fig. 6 are merely examples, and the planar arrangement of the distance measurement light sources and the authentication light sources and the images for distance measurement change according to the vein sensor 311.

The switching control illustrated in Figs. 7, 8, and 10 is merely an example, and the switching control changes according to the prediction result of the stop position and the stop time of the palm.

The equations (1) to (13) are merely examples, and the biometric authentication device 301 may perform the switching control using another calculation formula. The prediction unit 312 may predict the stop position and the stop time of the palm of the hand based on other motion models such as a minimum torque change model and a minimum muscle tension change model instead of the minimum-jerk model.

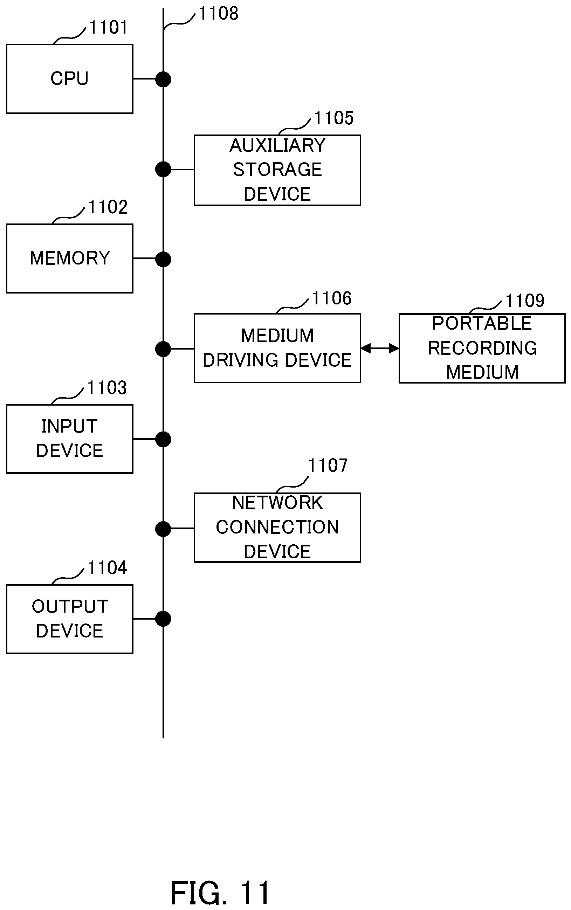

Fig. 11 illustrates a hardware configuration example of an information processing device (computer) used as the biometric authentication device 101 of Fig. 1 and the biometric authentication device 301 of Fig. 3. The information processing device in Fig. 11 includes a CPU 1101, a memory 1102, an input device 1103, an output device 1104, an auxiliary storage device 1105, a medium driving device 1106, and a network connection device 1107. These structural elements are hardware and are connected to each other by a bus 1108. The vein sensor 311 of Fig. 3 may be connected to the bus 1108.

The memory 1102 is, for example, a semiconductor memory such as a read only memory (ROM) and a random access memory (RAM), and stores programs and data used for processing. The memory 1102 may operate as the storage 315 in Fig. 3.

The CPU 1101 (processor) operates as the prediction unit 111, the control unit 112, and the authentication unit 113 in Fig. 1, for example, by executing a program using the memory 1102. The CPU 1101 also operates as the prediction unit 312, the control unit 313, and the authentication unit 314 in Fig. 3 by executing a program using the memory 1102.

The input device 1103 is, for example, a keyboard, a pointing device, or the like, and is used for inputting an instruction or information from an operator. The output device 1104 is, for example, a display device, a printer, a speaker, or the like, and is used for outputting an inquiry or an instruction to the operator and a processing result. The processing result may be an authentication result indicating authentication success or authentication failure.

The auxiliary storage device 1105 is, for example, a magnetic disk device, an optical disk device, a magneto-optical disk device, a tape device, or the like. The auxiliary storage device 1105 may be a hard disk drive or a solid state drive (SSD). The information processing device can store programs and data in the auxiliary storage device 1105 and load them into the memory 1102 for use. The auxiliary storage device 1105 may operate as the storage 315 in Fig. 3.

The medium driving device 1106 drives a portable recording medium 1109 and accesses the recorded contents. The portable recording medium 1109 is a memory device, a flexible disk, an optical disk, a magneto-optical disk, or the like. The portable recording medium 1109 may be a compact disk read only memory (CD-ROM), a digital versatile disk (DVD), a universal serial bus (USB) memory, or the like. The operator can store the program and the data in the portable recording medium 1109, load them into the memory 1102, and use them.

As described above, the computer-readable recording medium that stores the program and data used for processing is a physical (non-transitory) recording medium such as the memory 1102, the auxiliary storage device 1105, or the portable recording medium 1109.

The network connection device 1107 is a communication circuit that is connected to a communication network such as a wide area network (WAN) or a local area network (LAN) and performs data conversion accompanying communication. The information processing device can receive programs and data from an external device via the network connection device 1107, load the programs and data into the memory 1102, and use the programs and data.

Note that the information processing device does not need to include all the structural elements of Fig. 11, and some of the structural elements can be omitted according to the application or condition of the information processing device. For example, in a case where an interface with an operator is unnecessary, the input device 1103 and the output device 1104 may be omitted. In a case where the portable recording medium 1109 or the communication network is not used, the medium driving device 1106 or the network connection device 1107 may be omitted.

Although the disclosed embodiments and their advantages have been described in detail, those skilled in the art will be able to make various changes, additions, and omissions without departing from the scope of the invention as clearly set forth in the claims.

## Claims

1. A biometric authentication device comprising:
a prediction unit configured to predict a stop position at which a body part of an authentication subject stops based on a plurality of images obtained by an imaging device capturing the body part which moves toward the imaging device in a distance-measurement mode; and
a control unit configured to switch an imaging mode of the imaging device from the distance-measurement mode to an authentication mode before the body part stops at the stop position; and
an authentication unit configured to perform biometric authentication on the authentication subject by using an image of the body part captured by the imaging device in the authentication mode.

2. The biometric authentication device according to claim 1, wherein the prediction unit obtains a position and an acceleration of the body part at an image-capture time of each of the plurality of images based on the plurality of images, and predicts the stop position from a position of the body part where the acceleration of the body part becomes local maximum based on a motion model of a human body.

3. The biometric authentication device according to claim 2, wherein
the prediction unit checks whether or not the stop position is included in an authenticatable range, and predicts a stop time at which the body part stops at the stop position from a time when the acceleration of the body part becomes local maximum based on the motion model when the stop position is included in the authenticatable range, and
the control unit specifies a predetermined time before the stop time based on the stop time, and switches the imaging mode of the imaging device from the distance-measurement mode to the authentication mode at the predetermined time.

4. The biometric authentication device according to claim 2, wherein
the prediction unit checks whether or not the stop position is included in an authenticatable range, and
the control unit switches the imaging mode of the imaging device from the distance-measurement mode to the authentication mode when the stop position is included in the authenticatable range.

5. The biometric authentication device according to any one of claims 1 to 4, wherein the distance-measurement mode is an imaging mode in which the body part is captured using distance-measurement illumination light, and the authentication mode is an imaging mode in which the body part is captured using authentication illumination light.

6. A biometric authentication method of a computer performing a process comprising:
predicting a stop position at which a body part of an authentication subject stops based on a plurality of images obtained by an imaging device capturing the body part which moves toward the imaging device in a distance-measurement mode;
switching an imaging mode of the imaging device from the distance-measurement mode to an authentication mode before the body part stops at the stop position; and
performing biometric authentication on the authentication subject by using an image of the body part captured by the imaging device in the authentication mode.

7. A biometric authentication program for causing a computer to perform a process comprising:
predicting a stop position at which a body part of an authentication subject stops based on a plurality of images obtained by an imaging device capturing the body part which moves toward the imaging device in a distance-measurement mode;
switching an imaging mode of the imaging device from the distance-measurement mode to an authentication mode before the body part stops at the stop position; and
performing biometric authentication on the authentication subject by using an image of the body part captured by the imaging device in the authentication mode.
